# EUROPEAN PATENT APPLICATION

(11) **EP 1 703 402 A1**
(43) Date of publication of application: **20.09.2006**
(21) Application number: 05254344.4
(22) Date of filing: 11.07.2005
(51) Int. Cl.: G06F 11/20

(54) **Data processing system with fault tolerant communication paths**

(30) Priority: 17.03.2005 JP 2005076411
(71) Applicant: FUJITSU LIMITED, Kawasaki-shi, Kanagawa 211-8588 (JP)
(72) Inventor: Koguchi, Takashi, Fujitsu Limited, Kawasaki-shi Kanagawa 211-8588 (JP); Honda, Yasufumi, Fujitsu Limited, Kawasaki-shi Kanagawa 211-8588 (JP); Suzuki, Kenji, Fujitsu Limited, Kawasaki-shi Kanagawa 211-8588 (JP)
(74) Representative: Gibbs, Christopher Stephen

(57) **Abstract**

Two data communication paths (3A, 3B) are provided between first and second data processor devices (11-1, 11-2). First and second I/O ports (13(1A), 13(1B)) are provided between the first data processor device (11-1) and the first data communication path (3A). Third and fourth I/O ports (13(2A), 13(2B)) are provided between the second data processor device (11-1) and the second data communication path (3B). When failure occurs in the first data communication path (3A), the data transmitted from the first data processor device (11-1) is transferred to the second data processor device (11-2) through the first I/O port (13(1A)), a bypass communication path (21-1), the second I/O port(13(1B)), the second data communication path (3B), the third I/O port (13(2A)), a bypass communication path (21-2), and the fourth I/O port (13(2B)).

## Description

### Background of the Invention

### Field of the Invention

The present invention relates to a data processing system in which a plurality of data processor devices are connected to each other through a plurality of communication paths.

### Description of the Related Art

Data processing systems (or parallel computers), which process data using a plurality of data processor devices (or CPU) connected to each other, have been known since the past. This kind of data processing system can greatly improve processing speed by increasing the number of units, even though the performance of each data processor device is not very high.

The above data processing system requires measures for occurrence of failure in the communication paths connecting between data processor devices. For example, Patent Document 1 (Japanese unexamined patent publication bulletin No. S61-138354 (Fig. 1)) describes a configuration in which data buses, connecting between processors, are duplicated. Also, Patent Document 2 (Japanese unexamined patent publication bulletin No. H3-209550 (Fig. 12)) describes a system connecting a number of processors, arranged in a lattice pattern, to each other over a network. In this system, in time of troubles in a switch, data transfer is still carried out bypassing the switch.

In the case of failure occurrence in communication paths connecting between data processor devices, degenerate operation is performed. Here in this description, the degenerate operation refers to an operation mode for performing normal data processing operation as a whole system by transferring data, which is to be transferred through the failed communication path, through a normal (non-failed) communication path instead.

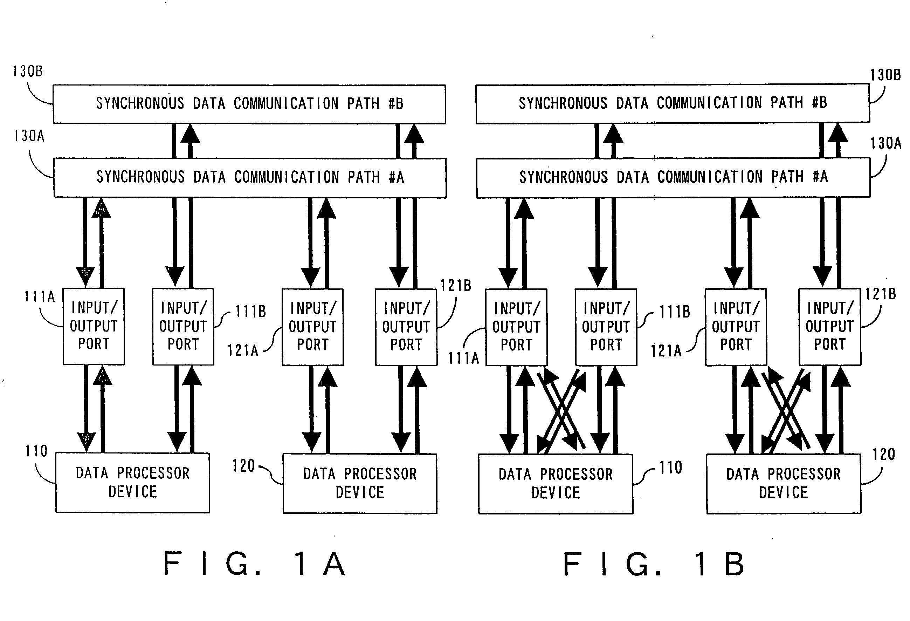

In the following description, degenerate operation of a data processing system is set forth with reference to Fig. 1A and 1B. In this description, data A and data B are transferred from a data processor device 110 to a data processor device 120. In the normal operation, the data A is transferred through an input/output port 111A, a communication path 130A and an input/output port 121A, and the data B is transferred through an input/output port 111B, a communication path 130B and an input/output port 121B.

Assume failure occurred in the communication path 130B. In such a case, both data A and B are transferred through the input/output port 111A, the communication path 130A and the input/output port 121A in the configuration shown in Fig. 1A. However, in this case, it is required to change operation of the data processor devices 110 and 120 in normal operation and that in degenerate operation.

In a configuration shown in Fig. 1B, each bus between the data processor devices (110, 120) and the input/output ports (111A, 111B, 121A, 121B) are all duplicated. In this configuration, the operation change of data processor devices 110 and 120 in normal operation and in degenerate operation is not required. However, this configuration requires to increase the number of pins (the number of terminals) of the data processor devices 110 and 120, compared with the configuration shown in Fig. 1A. Increase in the pin number would cause increase in cost of data processor devices and/or complexity of design of data processor devices.

### Summary of the Invention

It is an object of the present invention to realize degenerate operation without complicating the configuration and the operation of the data processor devices in a data processing system in which a plurality of data processor devices are connected to each other through a plurality of communication paths.

The data processing system of the present invention, which is provided with first and second communication paths operating in synchronization with each other, between a transmitting source data processor device and a transmitting destination data processor device, comprises: a first input/output port provided between the transmitting source data processor device and the first communication path; a second input/output port provided between the transmitting source data processor device and the second communication path; a bypass communication path for transmission provided between the first and second input/output ports; a third input/output port provided between the transmitting destination data processor device and the first communication path; a fourth input/output port provided between the transmitting destination data processor device and the second communication path; and a bypass communication path for reception provided between the third and fourth input/output ports.

When both of the first and second communication paths are in normal condition, first data transmitted by the transmitting source data processor device is transferred to the transmitting destination data processor device through the first input/output port, the first communication path and the third input/output port, and second data transmitted by the transmitting source data processor device is transferred to the transmitting destination data processor device through the second input/output port, the second communication path and the fourth input/output port. Meanwhile, when failure occurs in the second communication path, the first data is transferred to the transmitting destination data processor device through the first input/output port, the first communication path and the third input/output port, and the second data is transferred to the transmitting destination data processor device through the second input/output port, the bypass communication path for transmission, the first input/output port, the first communication path, the third input/output port, the bypass communication path for reception and the fourth input/output port.

In the above data processing system, when failure occurs in one of the communication paths, an input/output port, which is connected to the failed communication path, performs data transfer with its adjacent input/output port through the bypass communication path. Therefore, even if failure occurs, data transfer between the data processor device and each input/output port is carried out in the same way as when the communication system is in the normal condition.

In the above data processing system, the first input/output port may comprise a waiting buffer for retaining the first data in order to synchronize the first data and the second data. According to the configuration, even if failure occurs in the communication path, the first and second data can be transferred with both data being synchronized.

According to the present invention, even if failure occurs in the communication path, data transfer between the data processor device and each of the input/output ports is the same as when the communication system is in the normal condition. Thus degenerate operation can be realized without complicating a configuration and operation of the data processor device.

### Brief Description of the Drawings

Fig. 1A and Fig. 1B are diagrams explaining degenerate operation in the conventional data processing system;
Fig. 2 is a diagram showing an entire configuration of the data processing system of the embodiment of the present invention;
Fig. 3 is a diagram explaining data transfer in the data processing system in the normal operation;
Fig. 4 is a diagram explaining data transfer in the data processing system in failure occurrence;
Fig. 5 is a diagram describing a hardware configuration of transmitting circuits in the I/O port;
Fig. 6 is a diagram illustrating a hardware configuration of the receiving circuit of the I/O port;
Fig. 7 is a flowchart explaining the transmitting operation of the data processing system;
Fig. 8 is a flowchart explaining the receiving operation of the data processing system;
Fig. 9 is a practical example of the data processing system in other connection configuration;
Fig. 10 is a practical example of the data processing system in additional other connection configuration; and
Fig. 11 is a diagram describing a configuration of a data processing system comprising four data communication paths.

### Description of the Preferred Embodiment

In the following description, preferred embodiments of the present invention are set forth with reference to drawings.

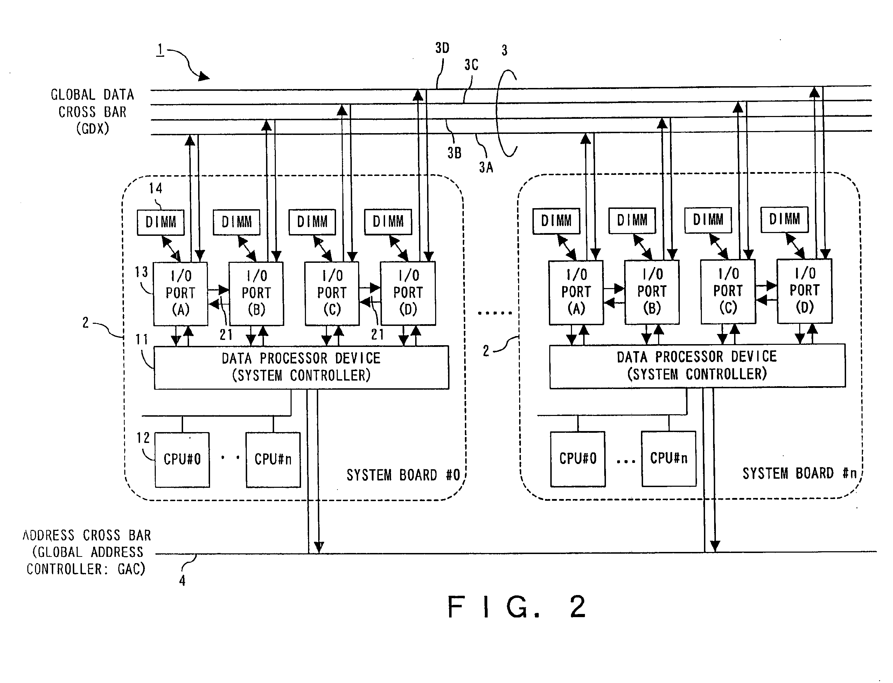

Fig. 2 is a diagram showing an entire configuration of the data processing system of the embodiment of the present invention. The data processing system 1 of the embodiment comprises a plurality of system boards (#0 through #n) 2, a plurality of data communication paths 3 connecting between the plurality of the system boards 2, and an address bus 4 connecting between the plurality of the system boards 2. In this embodiment, four data communication paths 3A through 3D are established. Although the number of the data communication path 3 is not limited in particular, it should be, basically, an even number.

Each of the system boards 2 comprises a data processor device 11, a CPU 12, I/O ports 13 and a memory (DIMM) 14. The data processor device 11 mainly carries out processing relating to data transfer between system boards. In other words, the data processor device 11, at least, takes control relating to operations for transmitting calculation result data of the CPU 12 or data read from the memory 14 to the other system board, and control relating to operations for transferring data received from the other system board to the corresponding CPU 12 or memory 14.

The CPU 12 is connected to the data processor device 11, and performs processing corresponding to the given data by executing a designated program. The number of the CPU 12 that each system board 2 comprises can be one or can be plural numbers.

The I/O ports 13 carry out processing to output data transmitted from the data processor device 11 to the data communication path 3, and processing to input data received through the data communication path 3 to the data processor device 11. Here, the data transmitted by the data processor device 11 includes the calculation result data by the CPU 12 and the data read from the memory 14. The data received through the data communication path 3 includes data to be passed on to the CPU 12 and the data to be written in the memory 14. Each of the I/O ports 13 is provided to the corresponding data communication path 3. In the present embodiment, four I/O ports 13 are provided between the data processor device 11 and data communication paths 3A through 3D, respectively.

The memory 14 is connected to each of the corresponding I/O port 13. Each of the I/O ports 13 operates as a memory controller of the corresponding memory 14.

Each of the data communication paths 3A through 3D is a data bus with a prescribed bit width, and transfers data synchronizing each other. The address bus 4 is for notifying of addresses between the data processor devices 11 each other.

In each of the system boards 2, a plurality of I/O ports 13 are in groups of two. A bypass communication path 21 is provided between the I/O ports 13 in each group. In the present embodiment, one bypass communication path 21 is provided between the I/O ports 13 (A) and 13 (B), and another bypass communication path 21 is also provided between the I/O ports 13 (C) and 13 (D) . The bypass communication path 21 is, for example, a data bus with a prescribed bit width.

In the data processing system 1 with the above configuration, each of the data processor device 11 can transmits data to an intended system board. Then, by executing a parallel calculation using a plurality of CPUs 12, it realizes high-speed data processing.

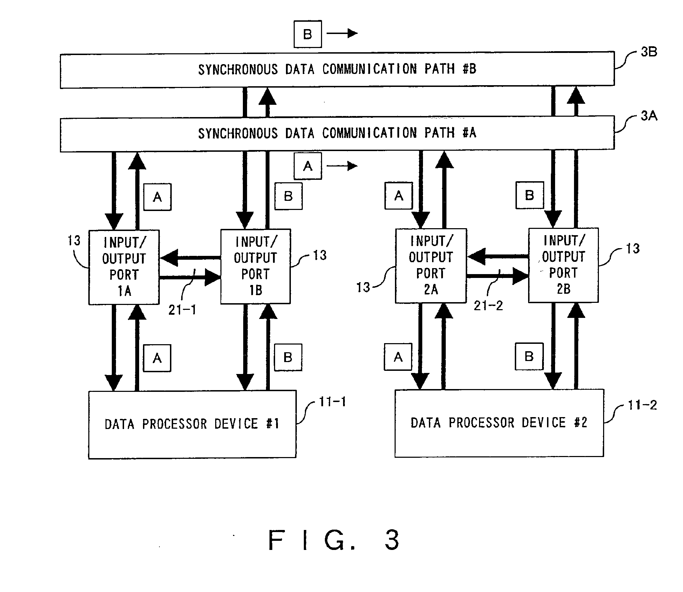

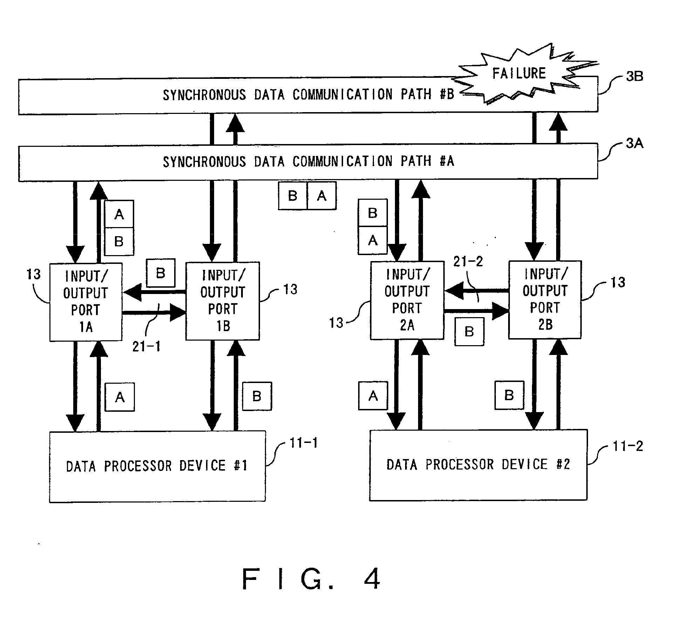

Fig. 3 and Fig. 4 are diagrams explaining overview of data transfer in the data processing system 1. In the following description, the data processing system 1 has a configuration with two data communication paths 3A and 3B between data processor devices 11-1 and 11-2. The data processor device 11-1 comprises a pair of the I/O ports 13 (1A) and 13 (1B), and the data processor device 11-2 comprises a pair of the I/O ports 13(2A) and 13 (2B) . A bypass communication path 21-1 is provided between the I/O ports 13 (1A) and 13 (1B), and a bypass communication path 21-2 is provided between the I/O ports 13(2A) and 13(2B). In addition, data A and data B are transferred from the data processor device 11-1 to the data processor device 11-2. The data A and the data B are a pair of synchronous data, which is required to be transferred at the same time.

Fig. 3 describes an operation of the data processing system 1 in the normal operation. Here, "normal" refers to the state without failure and in which both of the data communication paths 3A and 3B are available for data transfer. In the normal operation, the data A transmitted by the data processor device (transmitting source data processor device) 11-1 is transferred to the data processor device 11-2 through the I/O port 13 (1A), the data communication path 3A and the I/O port 13(2A). On the other hand, the data B is transferred to the data processor device 11-2 through the I/O port 13 (1B), the data communication path 3B and the I/O port 13 (2B) . That is to say, in the normal operation, basically, the data A and the data B are not transferred through the bypass communication paths 21-1 or 21-2.

Fig. 4 describes an operation of the data processing system 1 when failure occurs in the data communication path 3B. When failure occurs in the data communication path 3B, the data A is transferred to the data processor device 11-2 through the I/O port 13 (1A), the data communication path 3A, and the I/O port 13 (2A). On the other hand, the data B is transferred to the data processor device 11-2 through the I/O port 13 (1B), the bypass communication path 21-1, the I/O port 13 (1A), the data communication path 3A, the I/O port 13(2A), the bypass communication path 21-2 and the I/O port 13(2B).

At that time, the data processor device 11-1 simultaneously outputs the data A and the data B. Then the I/O port 13 (1A) outputs the data A directly received from the data processor device 11-1 and the data B received from the I/O port 13 (1B) to the data communication path 3A as one data block. In the receiving side, upon receiving the data block from the data communication path 3A, the I/O port 13(2A) transfers the data A contained in the data block to the data processor device 11-2 along with transferring the data B to the I/O port 13(2B). Then, the I/O port 13(2B) transfers the data B to the data processor device 11-2. The transfer of the data A from the I/O port 13 (2A) to the data processor device 11-2 and the transfer of the data B from the I/O port 13(2B) to the data processor device 11-2 are carried out simultaneously.

In the data processing system 1 of the present embodiment, as explained above, when failure occurs in either of the data communication path 3A or 3B, the degenerate operation, shown in Fig. 4, is performed. However, even though an operation mode (the normal operation shown in Fig. 3 and the degenerate operation shown in Fig. 4) of the data processing system 1 is changed, the operations of the data processor devices 11-1 and 11-2 basically do not change. In other words, the data processor device of the data transmitting source (in this case the data processor device 11-1) simultaneously outputs the data A and the data B to the I/O ports 13 (1A) and 13 (1B), respectively, in either of the operation modes. Similarly, in the data processor device of the data transmitting destination (in this case the data processor device 11-2), the data A and the data B are simultaneously input from the I/O ports 13(2A) and 13(2B), respectively.

Therefore, in the data processing system of the present embodiment, unlike the configuration shown in Fig. 1A, it is not required to comprise a special function for realizing the degenerate operation to each of the data processor device 11. That is, operation of each data processor device 11 is not required to change for realizing the degenerate operation. Also, unlike the configuration shown in Fig. 1B, it is not required to increase the number of pins in each data processor device 11 in order to realize the degenerate operation.

In the data processing system 1, because the bypass communication circuit 21 is provided between a pair of the I/O ports 13, circuits for degenerate operation are added to each of the I/O ports 13, resulting in increase in the pin numbers of each I/O port 13 compared with the configuration shown in Fig. 1A. However, the I/O port 13 is much smaller in its circuit scale compared with the data processor device 11, thus it is relatively easy to add the circuits for degenerate operation.

In the data processing system 1, if a communication path other than the data communication path 3 for transmitting/receiving some sort of data between the I/O ports 13, it is also possible to use the communication path as the bypass communication path 21. In such a configuration, the bypass communication path 21 to be used only for degenerate operation is not needed, and the number of pins of the I/O port 13 does not increase.

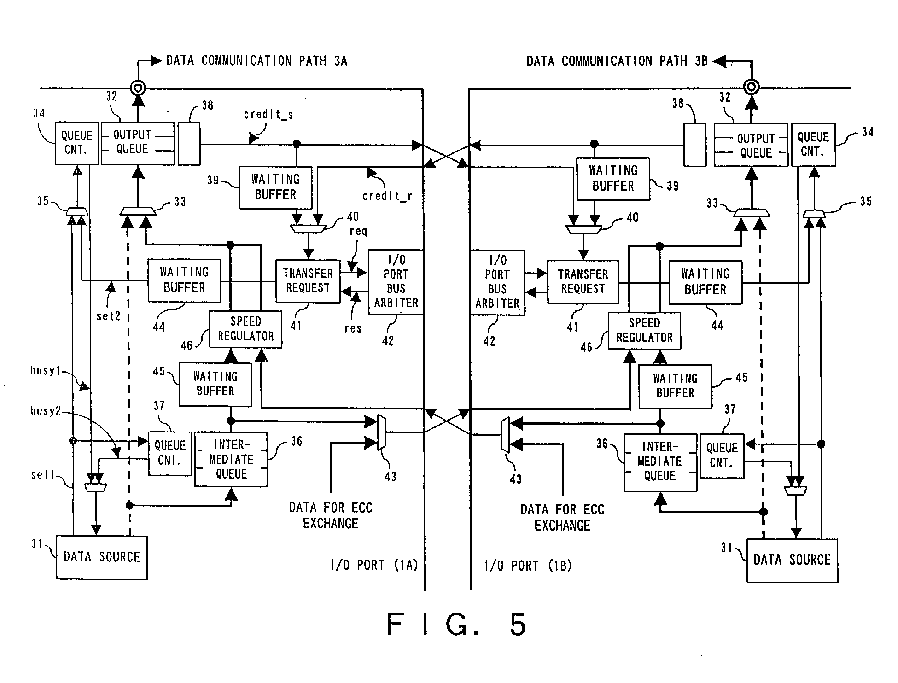

Fig. 5 is a diagram describing a hardware configuration of transmitting circuits in the I/O port 13. In this drawing, a pair of the I/O port 13 (1A) and the I/O port 13 (1B) is described. However, receiving circuits are omitted in Fig. 5. The I/O port 13 (1A) and the I/O port 13 (1B) have the same configuration.

Operations of each of the I/O port 13 vary depending on the state of the data communication path 3. For that reason, before explaining the operations of the I/O port 13, relation between the state of the data communication path 3 and operation modes of each I/O port 13 is explained. The data processing system 1 comprises a failure detecting function, not specifically shown in figures, for detecting the state of each of the communication paths 3A and 3B and for notifying each I/O port 13 (1A, 1B, 2A and 2B).

The operation modes of the I/O ports 13 (1A and 2A) connected to the data communication path 3A are described below.
(1) Normal operation mode: both of the data communication paths 3A and 3B are in the normal condition
(2) Degenerate operation mode: the data communication path 3A is in the normal condition, however failure occurs in the data communication path 3B
(3) Obstruction operation mode: failure occurs in the data communication path 3A, while the data communication path 3B is in the normal condition (In the obstruction operation mode, the I/O ports 13 can not transmit data to the corresponding data communication paths 3.)
(4) Operation suspend mode: failure occurs in both of the data communication paths 3A and 3B

In the same manner, the operation modes of the I/O ports 13 (1B and 2B) connected to the data communication path 3B are described below.
(1) Normal operation mode: both of the data communication paths 3A and 3B are in the normal condition
(2) Obstruction operation mode: the data communication path 3A is in the normal condition, however failure occurs in the data communication path 3B (In the obstruction operation mode, the I/O ports 13 can not transmit data to the corresponding data communication paths 3.)
(3) Degenerate operation mode: failure occurs in the data communication path 3A, while the data communication path 3B is in the normal condition
(4) Operation suspend mode: failure occurs in both of the data communication paths 3A and 3B

Back in Fig. 5, data source 31 outputs data when either an output queue buffer 32 or an intermediate queue buffer 36 is not full. In the I/O port in the normal operation mode, the data source 31 outputs data to a selector 33 in response to a queue busy signal "busy_1 " . In the I/O port in the degenerate operation mode or in the obstruction operation mode, the data source 31 outputs data to the intermediate queue buffer 36 in response to a queue busy signal "busy_2". The data output from the data source 31 is the data transmitted by a corresponding data processor device 11. The data sources 31 of the I/O ports in a pair (the I/O port 13 (1A) and the I/O port 13 (1B), in this case) output data at the same time.

The output queue buffer 32 temporarily retains data selected by the selector 33, and the data retained in the output queue buffer 32 is output to the corresponding data communication path 3 at a prescribed timing. Then, one set of data is output simultaneously from the output queue buffer 32 of the I/O ports in a pair, if failure does not occur in either of the data communication path 3. In the I/O ports in the normal operation mode, the selector 33 selects data from the data source 31. In the I/O ports in the degenerate operation mode, the selector 33 selects data from a speed regulator 46.

A queue controller 34 notifies the data source 31 of the state (full/empty) of the output queue buffer 32 using the queue busy signal "busy_1". And it writes the data selected by the selector 33 in the output queue buffer 32, according to a set signal provided through a selector 35. In the I/O ports in the normal operation mode, the selector 35 selects the set signal "set1" from the data source 31. On the other hand, in the I/O ports in the degenerate operation mode, the selector 35 selects the set signal "set2" from the waiting buffer 44.

The intermediate queue buffer 36 temporarily retains the data from the data source 31. The queue controller 37 notifies the data source 31 of the state (full/empty) of the intermediate queue buffer 36 using the queue busy signal "busy_2". It also writes data in the intermediate queue buffer 36 according to the set signal "set1" mentioned above. In addition, it reads out data from the intermediate queue buffer 36, when the bypass communication path 21 is in the available state. The data read out from the intermediate queue buffer 36 is sent to the waiting buffer 45 in the I/O port in the degenerate operation mode, or is sent to the selector 43 in the I/O port in the obstruction operation mode.

Every time the output queue buffer 32 becomes empty, the queue state monitoring unit 38 notifies the state using enabling signal "credit". The enabling signal "credit" is provided to a selector 40 through a waiting buffer 39, and is sent to the selector 40 in the I/O port in the other end as well. By so doing, the enabling signal "credit_s" within the same I/O port and/or the enabling signal "credit_r" from the I/O port in the other end is/are provided to the selector 40. In the I/O port in the degenerate operation mode, the selector 40 selects the enabling signal "credit s" within the same I/O port. On the other hand, in the I/O port in the obstruction operation mode, the selector 40 selects the enabling signal "credit_r" from the I/O port in the other end.

A transfer request unit 41 constantly grasps the state (full/empty) of the output queue buffer 32 by receiving the enabling signal "credit" through the selector 40. When the output queue buffer 32 is not full, a request signal "req", requesting the use of the bypass communication path 21 to an I/O port bus arbiter 42, is output. The I/O port bus arbiter 42, upon receiving the request signal "req", arbitrates between this request signal "req" and the other request signals (for example, a request to transmit/receive data for ECC exchange through bypass communication path 21) . If the bypass communication path 21 is available, the I/O port bus arbiter 42 returns a response signal "res" to the transfer request unit 41, and the selector 43 selects the data read from the intermediate queue buffer 36 according to the instruction from the I/O port bus arbiter 42 and output it to the bypass communication path 21. The transfer request unit 41, upon receiving the response signal "res", issues a set signal "set2". The set signal "set2" is sent to the selector 35 through the waiting buffer 44.

The waiting buffer 45 of the I/O port in the degenerate operation mode retains the data read from the intermediate queue buffer 36 for a prescribed period. The speed regulator 46, in the I/O port in the degenerate operation mode, generates a data block from the data from the waiting buffer 45 and the data transmitted from the I/O port in the other end through the bypass communication path 21, and outputs the data block to the selector 33.

Next, data transmitting operation of the I/O ports 13 (1A and 1B) with the above configuration is explained. In the following explanation, the data processor device 11-1 transmits the data A to the I/O port 13 (1A), and also transmits the data B to the I/O port 13 (1B).
(1) When both of the data communication paths 3A and 3B can be used;

In this case, the pair of the I/O ports perform the following operation at the same time. The data (data A and data B) output from the data source 31 are selected by the selector 33 and written in the output queue buffer 32, and the data written in the output buffer 32 are output to the data communication paths 3 (3A and 3B, respectively) at a prescribed timing. At that time, the I/O port 13 (1A) outputs the data A to the data communication path 3A, and the I/O port 13 (1B) outputs the data B to the data communication path 3B.
(2) When failure occurs in the data communication path 3B;

In this case, the I/O port 13 (1A) operates in the degenerate operation mode, and the I/O port 13 (1B) operates in the obstruction operation mode.

The data output from the data source 31 (data A and data B) are written in the intermediate queue buffer 36. In the degenerate operation mode or in the obstruction operation mode, if the output queue buffer is not full, which is regularly confirmed by the enabling signal "credit" transferred between the I/O ports, and additionally, if the bypass communication path 21 is in the available state, the data A retained in the intermediate queue buffer 36 of the I/O port 13 (1A) is sent to the speed regulator 46 through the waiting buffer 45. In this case, the data B retained in the intermediate queue buffer 36 of the I/O port 13 (1B) is transferred through the bypass communication path 21, and is transmitted to the speed regulator 46 of the I/O port 13 (1A).

In the following description, the operation of the I/O port 13 (1A), which is in the degenerate operation mode, is explained. The speed regulator 46 outputs the data A and the data B in series. The data A and the data B, output from the speed regulator 46, are selected by the selector 33 and written in the output queue buffer 32. Furthermore, the data A and the data B written in the output queue buffer 32 are output to the data communication path 3A at a prescribed timing. In other words, the data A and the data B are output from the I/O port 13(1A) to the data communication path 3A.

In such a manner, when failure occurs in the data communication path 3B, the data B in the I/O port 13 (1B) connected to the failed data communication path 3B is transferred to the I/O port 13(1A) through the bypass communication path 21, and is output to the data communication path 3A, which is not failed. At that time, a pair of data (the data A and the data B) is transferred in series.
(3) Failure occurs in the data communication path 3A;

The operation in such a case is basically the same as in the case of failure in the data communication path 3B. However, in this case, the data A in the I/O port 13 (1A) connected to the data communication path 3A is transferred to the I/O port 13 (1B) through the bypass communication path 21, and is output to the data communication path 3B.

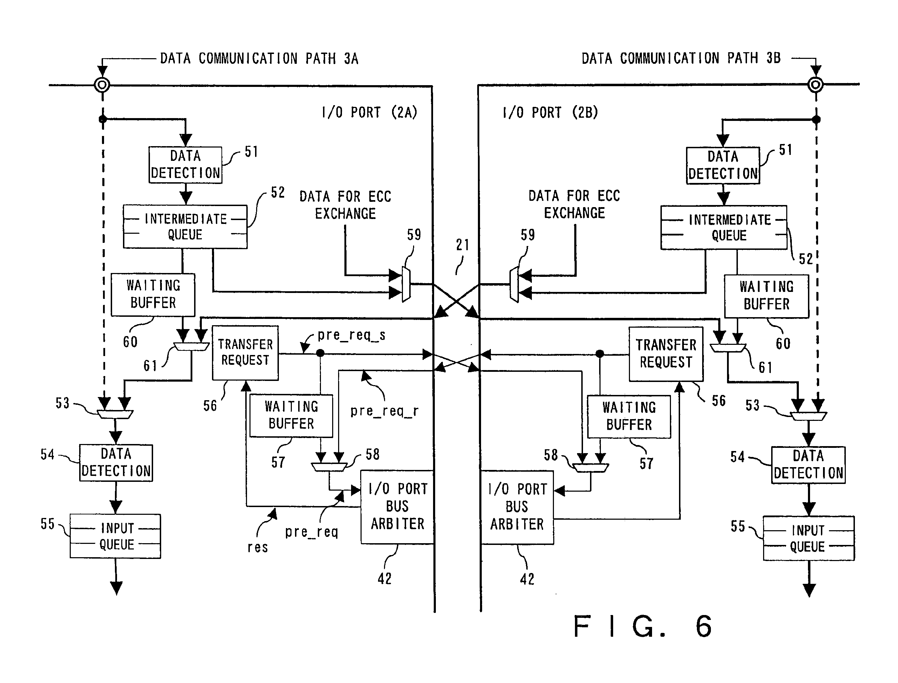

Fig. 6 is a diagram illustrating a hardware configuration of the receiving circuit of the I/O port 13. In this drawing, a pair of the I/O port 13 (2A) and the I/O port 13 (2B) is described. In Fig. 6, however, the transmitting circuit is omitted. The I/O port 13(2A) has the same configuration as the I/O port 13(2B).

The data received from the corresponding data communication path 3 is detected by a detector 51 or a detector 54. The data detected by the detector 51 is written in the intermediate queue buffer 52, and the data detected by the detector 54 is written in the input queue buffer 55. The intermediate queue buffer 52 retains the written data until the bypass communication path 21 becomes available. The data written in the input queue buffer 55 is transmitted to the corresponding data processor device 11.

In the I/O port in the normal operation mode, the selector 53 selects the data directly transmitted from the corresponding data communication path 3. In the I/O port in the degenerate operation mode or in the obstruction operation mode, on the other hand, the selector 53 selects data from a selector 61.

The transfer request unit 56, when data is written in the intermediate queue buffer 52, issues a request signal "pre_req" for notifying the operation. The request signal "pre_req" is provided to a selector 58 through a waiting buffer 57, and is transmitted to the selector 58 of the I/O port in the other end at the same time. By so doing, the selector 58 is provided with the request signal "pre_req_s" within the I/O port and/or the request signal "pre_req_r" of the I/O port in the other end. In the I/O port in the degenerate operation mode, the selector 58 selects the request signal "pre_req_s" within the I/O port. On the other hand, in the I/O port of the obstruction operation mode, the selector 58 selects the request signal "pre_req_r" from the I/O port in the other end.

The I/O port bus arbiter 42, after receiving the request signal "pre_req" selected by the selector 58, arbitrates between the request signal and the other request signals (for example, a request to transmit/receive data for ECC exchange through the bypass communication path 21). If the bypass communication path 21 is available, the I/O port bus arbiter 42 returns a response signal "res" to the transfer request unit 56, and the selector 59 selects the data read from the intermediate queue buffer 52 according to an instruction from the I/O port bus arbiter 42, and outputs the data to the bypass communication path 21.

The waiting buffer 60, in the I/O port in the degenerate operation mode, retains the data read from the intermediate queue buffer 52 for a prescribed period. The selector 61 selects the data retained in the waiting buffer 60 in the I/O port in the degenerate operation mode, and selects the data transmitted from the I/O port in the other end through the bypass communication path 21 in the I/O port in the obstruction operation mode.

Next, the data receiving operation of the I/O ports 13 (2A and 2B) with the above configuration is explained.
(1) When both of the data communication paths 3A and 3B can be used;

In this case, the data A and the data B are transferred through the data communication paths 3A and 3B, respectively. The data A from the data communication path 3A is written in the input queue buffer 55 in the I/O port 13(2A), whereas the data B from the data communication path 3B is written in the input queue buffer 55 in the I/O port 13 (2B) . Data path in the I/O port is drawn by the broken line. Then, the data A and the data B written in input queue buffer 55 of I/O ports in a pair are transferred to the data processor device 11-2 at the same time.
(2) When failure occurs in the data communication path 3B;

In this case, the I/O port 13 (2A) operates in the degenerate operation mode, and the I/O port 13(2B) operates in the obstruction operation mode.

Both of the data A and the data B are transferred through the data communication path 3A. Then both of the data A and the data B are written in the intermediate queue buffer 52 in the I/O port 13 (2A) . Subsequently, the request signal "pre_req" is transferred between the I/O ports 13 (2A) and 13 (2B) . If the bypass communication path 21 is available, the data A retained in the intermediate queue buffer 52 of the I/O port 13 (2A) is transmitted to the input queue buffer 55 through the waiting buffer 60, and the data B is transferred through the bypass communication path 21, and transmitted to the input queue buffer 55 of the I/o port 13 (2B) . The data A and the data B, written in corresponding input queue buffer 55 of a pair of I/O ports are transferred to the data processor device 11-2 at the same time.
(3) Failure occurs in the data communication path 3A;

The operation in such a case is basically the same as in the case of failure in the data communication path 3B. However, in this case, both of the data A and the data B are transferred through the data communication path 3B, and the data A is transferred from the I/O port 13 (2B) to the I/O port 13 (2A) through the bypass communication path 21.

The data processing system 1 of the present embodiment can exchange ECC data between a pair of I/O ports through the bypass communication path 21. Here, the ECC data is an error correction code (or its equivalent data sequence), and is added to the end of the data transmitted/received between the data processor devices.

The data processing system 1, when the data processor device 11 transfers a pair of data through a pair of I/O ports 13, can add one error correction code to the data in a pair. For example, when 16-bit ECC is used, it is possible that 8-bit ECC is given to each of the data in a pair. In such a case, by exchanging 8-bit ECC (or its equivalent data sequence) between I/O ports, the 16-bit ECC can be realized.

When the data processing system 1 has the above configuration, the 8-bit ECC is exchanged between the I/O ports using a data bus, separately provided from the data communication path 3. Therefore, in the system with such a configuration, the bypass communication path 21 relating to the present invention can be realized using the data bus for the ECC exchange. If it is the case, the I/O port bus arbiter 42 arbitrates between data buses (i.e. the communication paths 21).

As described above, when a data bus is provided between the I/O ports for the purpose except for the degenerate operation, the bypass communication path 21 can be realized using the data bus. However, the data bus for ECC exchange is just an example, and when a communication path of some kinds for exchanging control data is established between the I/O ports, it is also possible to provide the bypass communication path 21 using the communication path.

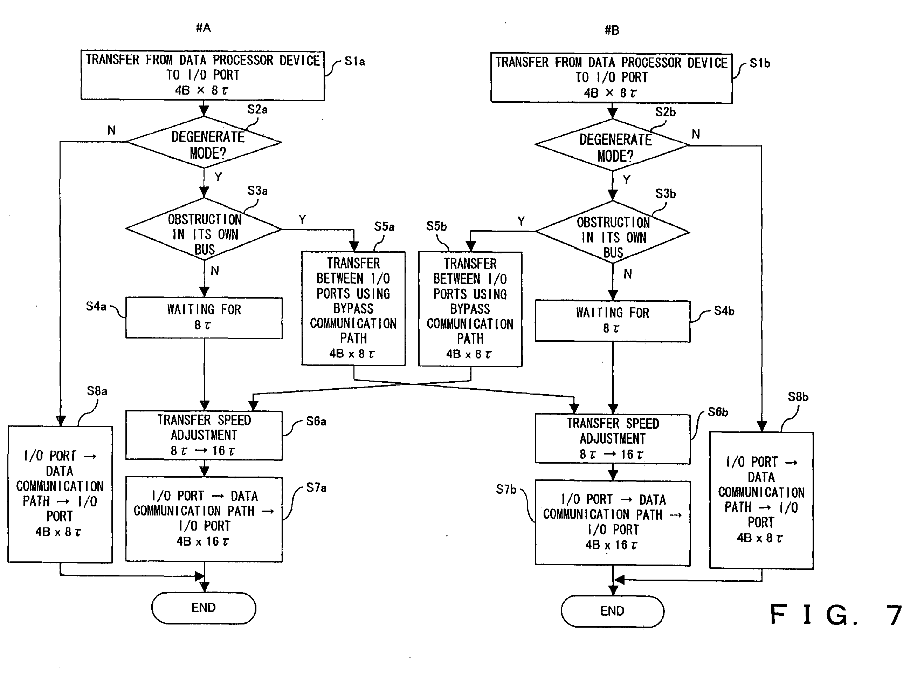

Fig. 7 is a flowchart explaining the transmitting operation of the data processing system 1. In the following explanation, it is assumed that in a system comprising two data communication paths 3A and 3B, 64-byte data is split into 32-byte data in a pair, and is transferred. It is also assumed that data width of each of the data communication paths 3A and 3B is 4 bytes. The step S1a through S8a are processing performed by the I/O port connected to the data communication path 3A, and the step S1b through S8b are processing performed by the I/O port connected to the data communication path 3B.

In step S1a and step S1b, data is transferred from the data processor device 11 to the I/O port 13. Here, data transfer time is 8τ. In step S2a and step S2b, whether or not the operation of the data processing system 1 is in the degenerate operation mode is examined. If failure occurs in either of the data communication path 3A or 3B, at that time, it is determined that the operation mode is in degenerate operation mode. In the degenerate operation mode, the data, received from the data processor device 11 in step S1a and step S1b, is retained in the intermediate queue buffer 36.

In step S3a and step S3b, whether or not the corresponding data communication path 3A or 3B is obstructed or not is examined. For example, in this description, if failure occurs in the data communication path 3B, it is determined as "No" in step S3a in #A side, and it is determined as "Yes" in step S3b in #B side. That is to say, if it is not in the obstruction state, the process proceeds to step S4a or step S4b, and if it is in the obstruction state, the process proceeds to step S5a or step S5b.

In step S4a and step S4b, the data received from the data processor device 11 in step S1a and step S1b, respectively, is stored in waiting buffer 45. In this case, the wait time by the waiting buffer 45 is 8τ (the time period required to transfer 32-byte data in a bus with 4-byte width).

In step S5a and S5b, the data received from the data processor device 11 in step S1a and step S1b, respectively, through the bypass communication path 21 is transferred to the I/O port in the other end. If the data width of the bypass communication path is 4 bytes, the data transfer time is 8τ.

In step S6a or step S6b, the data retained by the waiting buffer 45 and the data received from the I/O port in the other end are transferred to the output queue buffer 32 in series. Here, since 64-byte data is transferred, its data transfer time is 16τ. Step S6a and step S6b are carried out by the speed regulator 46 in the I/O port connected to the data communication path 3, which is not failed.

In step S7a and step S7b, the data is transferred from the transmission source I/O port to the transmission destination I/O port through the data communication path 3. In such a case, since 64-byte data is transferred, its data transfer time is 16τ. Step S7a and step S7b are carried out only by the I/O port connected to the data communication path 3, which is not failed.

When the data processing system 1 is not in the degenerate operation mode (step S2a and step S2b: No), in step S8a and step S8b, the data received from the data processor device 11 in step S1a and step S1b, respectively, is output to the corresponding data communication path. In other words, the I/O port (#A) outputs 32-bit data A to the data communication path 3A, and the I/O port (#B) outputs 32-bit data B to the data communication path 3B.

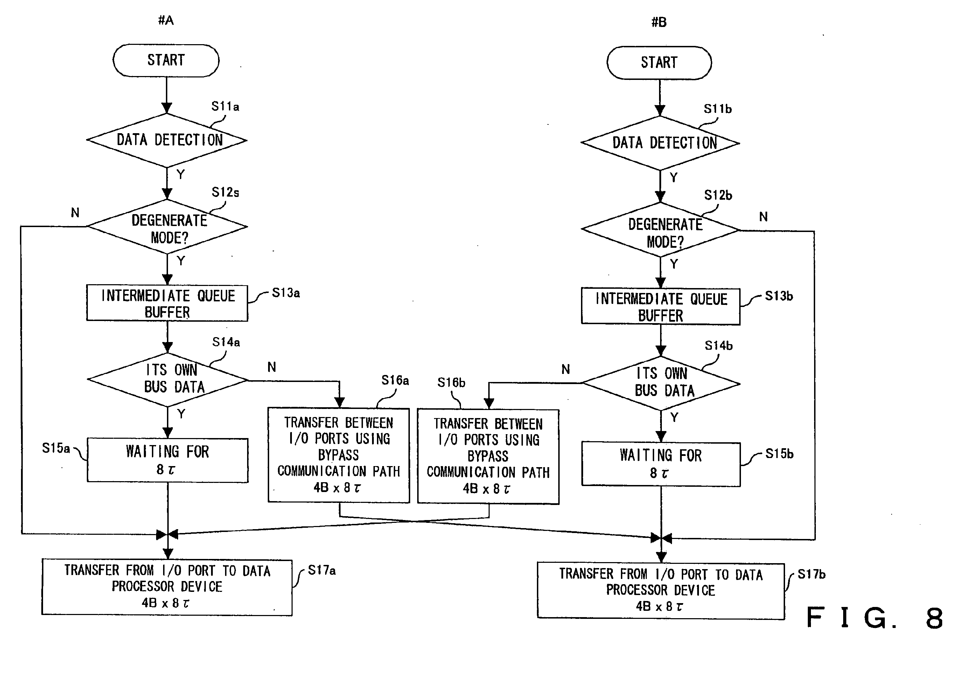

Fig. 8 is a flowchart explaining the receiving operation of the data processing system 1. In the following description, as in the explanation of Fig. 7, it is assumed that in a system comprising two data communication paths 3A and 3B, 64-byte data is split into 32-byte data in a pair, and is transferred. It is also assumed that data width of each of the data communication paths 3A and 3B is 4 bytes. Step S11a through S17a are processing relating to the I/O port connected to the data communication path 3A, and the step S11b through S17b are processing relating to the I/O port connected to the data communication path 3B.

In step S11a and step S11b, data received through the corresponding data communication path 3 is detected. In step S12a and step S12b, whether or not the operation of the data processing system 1 is in the degenerate operation mode is examined. If it is in the degenerate mode, the received data is stored in the intermediate queue buffer 52 in step S13a and step 13b, respectively. In such a case, the received data is 64-byte data comprised of the 32-byte data A and the 32-byte data B. On the other hand, in the normal operation mode, the received data is transmitted to the input queue buffer 55 without any modification. In this case, each of the received data is 32-byte data.

In step S14a and step S14b, the 32-byte data A and the 32-byte data B are detected from the 64-byte received data. In the I/O port (#A), the data A is written in the waiting buffer 60 in step S15a, and in step S16a, the data B is transferred to the I/O port(#B) through the bypass communication path 21. On the other hand, in the I/O port #B), the data B is written in the waiting buffer 60 in step S15b, and in step S16b, the data A is transferred to the I/O port(#A) through the bypass communication path 21. Here, the wait time of the waiting buffer 60 is 8τ (the time period required to transfer 32-byte data in a bus with 4-byte width).

If the data processing system 1 is in the normal operation mode, step S13a through step S16a and step S13b through step S16b are skipped, and the 32-byte data received from the corresponding data communication path 3 is written in the input queue buffer 55, respectively. If failure occurs in the corresponding data communication path 3, the 32-byte data, transferred from the I/O port in the other end through the bypass communication path 21, is written in the input queue buffer 55. In addition, if failure occurs in the other data communication path 3, the 32-byte data, received from the corresponding data communication path 3, is written in the input queue buffer 55. That is to say, in either of the cases, 32-byte data to be processed by the I/O port is written in the input queue buffer 55.

In step S17a and step S17b, data written in the input queue buffer 55 is transferred to the data processor device 11.

In the above embodiment, the configuration in which two I/O ports 13 are connected to one unit of data processor device 11 is described; however, the present invention is not limited to the configuration.

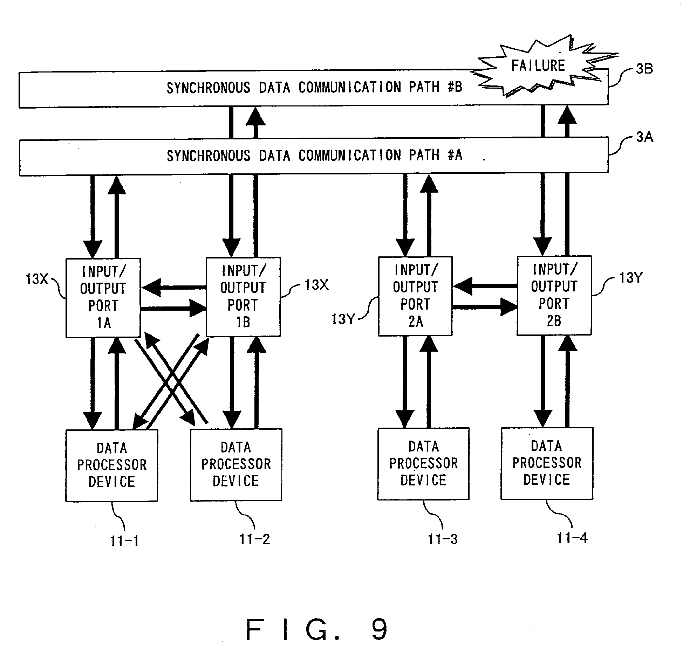

For example, in Fig. 9, two data processor devices 11-1 and 11-2 are connected to each of the I/O port 13X. In this case, the I/O port 13X is required to have a selector for selecting data transmitted from the data processor devices 11-1 and 11-2, and a switch for switching the output destination of the data to be transferred to the data processor devices 11-1 and 11-2.

Each of the data processor devices 11-3 and 11-4 is connected to one I/O port 13Y. Here, it is assumed that the data processor device 11-1 (or 11-2) shown in Fig. 3 and Fig. 4 and a pair of data processor devices 11-3 and 11-4 shown in Fig. 9 provide the same function. The data processor devices 11-3 and 11-4 operate in synchronization with each other.

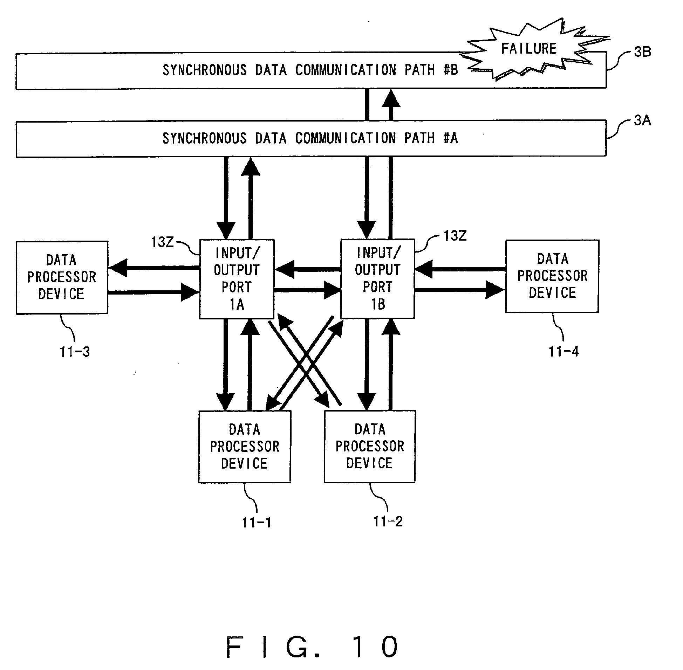

In an example shown in Fig. 10, each I/O port 13Z has three units of data processor devices connected. In other words, to the I/O port 13Z of #A system, the data processor devices 11-1, 11-2 and 11-3 are connected, and to the I/O port 13Z of #B system, the data processor devices 11-1, 11-2 and 11-4 are connected. In this case, each of the I/O port 13Z also requires a selector and a switch.

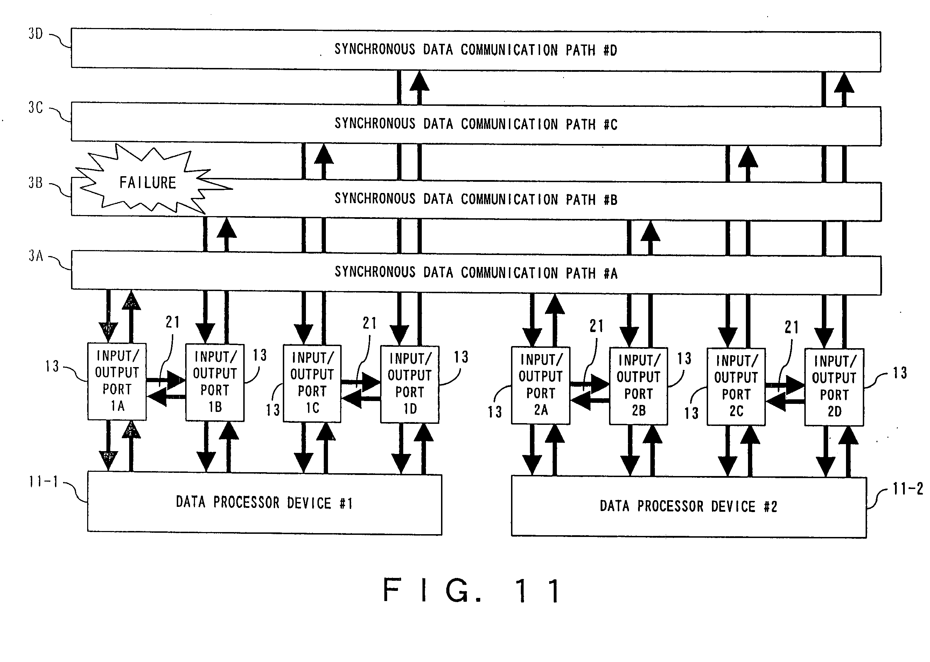

Fig. 11 is a diagram describing a configuration of a data processing system comprising four data communication paths 3A through 3D. In this case, four I/O ports corresponding to the four data communication paths 3A through 3D are connected to each of the data processor devices 11-1 and 11-2.

The bypass communication paths 21 are provided between the I/O port 13(1A) and the I/o port 13 (1B), between the I/O port 13 (1C) and the I/O port 13 (1D), between the I/O port 13(2A) and the I/o port 13(2B), and between the I/O port 13 (2C) and the I/O port 13 (2D) .

In the data processing system with the above configuration, in the normal operation mode, data A is transmitted/received through the I/O port 13 (1A) the data communication path 3A and the I/o port 13 (2A), data B is transmitted/received through the I/O port 13(1B) the data communication path 3B and the I/O port 13 (2B), data C is transmitted/received through the I/O port 13 (1C), the data communication path 3C and the I/O port 13 (2C), and data D is transmitted/received through the I/O port 13 (1D), the communication path 3D and the I/O port 13(2D). At that time, the corresponding data A through data D are simultaneously transferred in synchronization with each other.

Assume that, in the data processing system with the above configuration, failure occurs in the data communication path 3B. In such a case, the data B, as explained with reference to Fig. 3 through Fig. 8, is transmitted/received through the bypass communication path 21 and a communication path in #A system (the I/O port 13 (1A), the data communication path 3A and the I/O port 13 (2A)) . The data D is transmitted/received through the bypass communication path 21 and a communication path in #C system (the I/O port 13 (1C), the data communication path 3C and the I/O port 13 (2C)) . In this manner, even in the failure occurring in the data communication path 3B alone, the degenerate operation mode is carried out not only in #A/#B systems but also in #C/#D systems. By having such a configuration, the corresponding data A through data D can be synchronized with each other and transferred in the same time.

## Claims

1. A data processing system, provided with first and second communication paths (3A, 3B), operating in synchronization with each other, between a transmitting source data processor device (11-1) and a transmitting destination data processor device (11-2), comprising:
a first input/output port (13 (1A)) provided between the transmitting source data processor device and the first communication path;
a second input/output port (13(1B)) provided between the transmitting source data processor device and the second communication path;
a bypass communication path for transmission (21-1) provided between the first and second input/output ports;
a third input/output port (13 (1C)) provided between the transmitting destination data processor device and the first communication path;
a fourth input/output port (13(1D)) provided between the transmitting destination data processor device and the second communication path; and
a bypass communication path for reception (21-2) provided between the third and fourth input/output ports, wherein
when both of the first and second communication paths are in normal condition, first data transmitted by the transmitting source data processor device is transferred to the transmitting destination data processor device through the first input/output port, the first communication path and the third input/output port, and second data transmitted by the transmitting source data processor device is transferred to the transmitting destination data processor device through the second input/output port, the second communication path and the fourth input/output port, and wherein
when failure occurs in the second communication path, the first data is transferred to the transmitting destination data processor device through the first input/output port, the first communication path and the third input/output port, and the second data is transferred to the transmitting destination data processor device through the second input/output port, the bypass communication path for transmission, the first input/output port, the first communication path, the third input/output port, the bypass communication path for reception and the fourth input/output port.

2. A data processing system according to claim 1, wherein
the first input/output port (13 (1A)) includes a queue buffer (32) retaining data to be transmitted to the first communication path and a notification unit for notifying the second input/output port (13 (1B)) of the status of the queue buffer (32), and
the second input/output port (13 (1B)) includes an output control unit (42) for outputting the second data to the bypass communication path for transmission (21-1) in response to the notification from the notification unit.

3. A data processing system according to claim 2, wherein the output control unit (42) arbitrates requests for use of the bypass communication path for transmission (21-1).

4. A data processing system according to any preceding claim, wherein the first input/output port (13 (1A)) comprises a waiting buffer (45) for retaining the first data to synchronize the first data and the second data.

5. A data processing system according to claim 4, wherein the first input/output port (13 (1A)) includes an adjustment unit (46) for transmitting the first data retained by the waiting buffer (45) and the second data received through the bypass communication path for transmission (21-1) in series.

6. A data processing system according to claim 5, wherein the first input/output port (13 (1A)) includes a selector (33) for selecting either of the first data transmitted by the transmitting source data processor device (11-1) or the output of the adjustment unit (46).

7. A data processing system according to any preceding claim, wherein the third input/output port (13 (1C)) includes:
a queue buffer (52) for retaining the first and second data; and
a waiting buffer (60) for retaining the first data in order to synchronize the first data read from the queue buffer (52) with the second data read from the queue buffer and transferred to the fourth input/output port (13 (1D) ) through the bypass communication path for reception (21-2).

8. A data processing system according to any preceding claim, wherein the fourth input/output port (13(1D)) comprises a selector (61) for selecting either of the data received through the second communication path (3B) and the data received through the bypass communication path (21-2) for reception.

9. A data processing system according to any preceding claim, wherein first control data for controlling the first data and second control data for controlling the second data are exchanged through the bypass communication path for transmission (21-1), and/or through the bypass communication path for reception (21-2).

10. A data processing system according to any preceding claim, wherein the transmitting source data processor device comprises a plurality of transmitting source data processing units, and the first or second input/output port is connected to the plurality of transmitting source data processing units and contains a selector for selecting data from the plurality of transmitting source data processing units.

11. A data processing system according to any preceding claim, wherein the transmitting source data processor device is comprises a plurality of transmitting destination data processing units, and the third or fourth input/output ports is connected to the plurality of transmitting destination data processing units and contains a distributor for controlling data distribution to the plurality of transmitting source data processing units.

12. A data processing system according to any preceding claim, wherein a plurality of transmitting source data processor devices are connected to each of the first and second input/output ports.

13. A data processing system according to any preceding claim, wherein a plurality of transmitting destination data processor devices are connected to each of the third and fourth input/output ports.

14. A data processing system, provided with first to fourth communication paths (3A-3D), operating in synchronization with each other, between a transmitting source data processor device (11-1) and a transmitting destination data processor device (11-2), comprising:
first to fourth transmitting source input/output ports (13 (1A)-13 (1D)) provided between the transmitting source data processor device and the first to fourth communication paths, respectively;
a first bypass communication path for transmission (21) provided between the first and second transmitting source input/output ports;
a second bypass communication path for transmission (21) provided between the third and fourth transmitting source input/output ports;
first to fourth transmitting destination input/output ports (13(2A)-13(2D)) provided between the transmitting destination data processor device and the first through fourth communication paths, respectively;
a first bypass communication path for reception (21) provided between the first and second transmitting destination input / output ports; and
a second bypass communication path for reception (21) provided between the third and fourth transmitting destination input/output ports, wherein
when the first to fourth communication paths are in the normal condition, first data to fourth data transmitted by the transmitting source data processor device are transferred to the transmitting destination data processor device via the first to fourth transmitting source input/output ports, the first to fourth communication paths and the first to fourth transmitting destination input/output ports, respectively, and wherein
when failure occurs in the second communication path, the first data is transferred to the transmitting destination data processor device via the first transmitting source input/output port, the first communication path and the first transmitting destination input/output port, the second data is transferred to the transmitting destination data processor device via the second transmitting source input/output port, the first bypass communication path for transmission, the first transmission source input/output port, the first communication path, the first transmitting destination input/output port, the first bypass communication path for reception and the second transmitting destination input/output port, the third data is transferred to the transmitting destination data processor device via the third transmitting source input/output port, the third communication path and the third transmitting destination input/output port, and the fourth data is transferred to the transmitting destination data processor device via the fourth transmitting source input/output port, the second bypass communication path for transmission, the third transmitting source input/output port, the third communication path, the third transmitting destination input/output port, the second bypass communication path for reception and the fourth transmitting destination input/output port.
